# EUROPÄISCHE PATENTSCHRIFT

(11) **EP 1 300 505 B1**
(45) Veröffentlichungstag und Bekanntmachung des Hinweises auf die Patenterteilung: **14.02.2007**
(21) Anmeldenummer: 02022219.6
(22) Anmeldetag: 01.10.2002
(51) Int. Cl.: D06M 10/06, D06M 10/08, D06M 11/83, B60R 21/16, D06M 14/32, D06M 14/34

(54) **Gassack für ein Rückhaltesystem in Fahrzeugen**
Airbag for a restraint system in vehicles
Coussin gonflable pour un système de retenue dans un véhicule

(30) Priorität: 02.10.2001 DE 10148634
(43) Veröffentlichungstag der Anmeldung: 09.04.2003
(73) Patentinhaber: TRW Automotive Safety Systems GmbH, 63743 Aschaffenburg (DE)
(72) Erfinder: Kreuzer, Martin, 63839 Kleinwallstadt (DE)
(74) Vertreter: Degwert, Hartmut

(56) Entgegenhaltungen:
- WO-A-98/30748
- DE-A- 3 436 097
- GB-A- 2 354 745
- DATABASE WPI Section Ch, Week 199503 Derwent Publications Ltd., London, GB; Class A23, AN 1995-018831 XP002178601 & JP 06 305089 A (TOMOEGAWA SEISHISHO KK), 1. November 1994 (1994-11-01)
- DATABASE WPI Section Ch, Week 199338 Derwent Publications Ltd., London, GB; Class A92, AN 1993-299408 XP002248418 & JP 05 213137 A (TORAY IND INC), 24. August 1993 (1993-08-24)
- DATABASE WPI Section Ch, Week 199404 Derwent Publications Ltd., London, GB; Class A35, AN 1994-031435 XP002178602 & JP 05 338092 A (TORAY IND INC), 21. Dezember 1993 (1993-12-21)

## Beschreibung

Die vorliegende Erfindung betrifft einen Gassack für ein Rückhaltesystem in Fahrzeugen, eine Vorrichtung zum Schutz von Fahrzeuginsassen mit einem derartigen Gassack, ein Verfahren zur Herstellung des Gassacks sowie die Verwendung eines Gewebes für den Gassack.

Gassäcke oder Airbags für Fahrzeuginsassenrückhaltesysteme bestehen üblicherweise aus silikonbeschichteten oder unbeschichteten Polyamid- oder Polyestergeweben. Die Gewebe müssen eine gezielte Einstellung der Luftdurchlässigkeit ermöglichen und außerdem hitzebeständig sein. Darüber hinaus sollen die Gewebe im Interesse eines möglichst geringen Raumbedarfs für die Unterbringung des Gassacks im Fahrzeug eine gute Faltbarkeit und eine möglichst geringe Masse aufweisen.

Es wurde bereits vorgeschlagen, die Innenseite der Gassäcke mit wärmeabsorbierenden Mitteln, wie beispielsweise eine Folienbeschichtung oder anderen Opfermaterialien zu versehen. Diese Opfermaterialien werden durch die in den Gassack einströmenden heißen Gase aufgeschmolzen oder zersetzt und sollen so die eigentliche Gassackwandung vor einer Beschädigung schützen. Alternativ dazu sollen hochtemperaturfeste Fasermaterialien mit im Vergleich zu den üblichen Nylon-Geweben höheren Schmelzpunkten zum Einsatz kommen. Die Verwendung von Opfermaterialien führt allerdings zu höheren Schichtdicken und einer höheren Masse des Gassackgewebes. Der Einsatz spezieller hochtemperaturfester Kunststoffe ist wirtschaftlich nicht vertretbar.

Aus der US-A-5,599,585 ist die Herstellung von metallisierten Geweben durch Plasma-Beschichtung bekannt. Die JP-A-05338092 beschreibt die Plasmabehandlung von Airbag-Gewebe zur Verbesserung der Haftfähigkeit eines anschließend auf das behandelte Gewebe aufgebrachten thermoplastischen Elastomers.

Die WO-A-98/30748 offenbart ein Gassackgewebe aus Polyamid, dessen der Gassack-Innenseite zugewandte Fläche mit einer Polymerbeschichtung versehen ist, der ein Pigment mit wärmereflektierenden Eigenschaften beigemischt ist. Das Pigment kann eine Aluminiumpaste oder ein Aluminiumpigment sein.

Aus der DE 34 36 097 A1 ist ein metallbeschichteter Fasergegenstand bekannt, auf dem die Metallschicht durch Sputtem abgelagert ist und eine Dicke von 5 bis 1000 nm aufweist. Die Haftung der Metallschicht wird durch Grundieren mit einem Anstrichmittel verbessert. Außerdem kann zur Verhinderung von Korrosion und Abnutzung eine Schutzschicht auf die Metallschicht aufgetragen werden. Der beschichtete Fasergegenstand soll u.a. als Autoauskleidungsstoff mit flammhemmenden und hitzebeständigen Eigenschaften verwendbar sein.

Es besteht daher weiterhin Bedarf an kostengünstig herstellbaren Gassäcken, die eine verbesserte Hitzebeständigkeit aufweisen.

Die Erfindung schafft einen Gassack für ein Rückhaltesystem in Fahrzeugen, mit einer Wandung aus Gewebe, der dadurch gekennzeichnet ist, daß eine Oberfläche des Gewebes zur Steigerung der Hitzebeständigkeit, insbesondere gegenüber auftreffenden Heißgasen, in einem Plasma behandelt ist. Die Plasmabehandlung ist vorzugsweise eine Metallisierung, wobei die durch die Metallisierung gebildete Metallschicht zwischen 40 nm und 10 µm dick sein kann. Je nach Anwendungszweck kann die Plasmabehandlung auch eine Fluorierung sein.

Der erfindungsgemäße Gassack weist außerdem eine Innenseite zur Aufnahme eines Gasvolumens auf, wobei die plasmabehandelte Oberfläche des Gassackgewebes im aufgeblasenen Zustand des Gassacks dem Gasvolumen zugewandt ist.

Vorzugsweise bestehen wenigstens Teile der Gassackwandung aus dem Gewebe mit der plasmabehandelten Oberfläche. Die Wandung kann jedoch auch vollständig aus dem plasmabehandelten Gewebe gebildet sein.

Die Erfindung richtet sich darüber hinaus auch auf eine Vorrichtung zum Schutz von Fahrzeuginsassen mit dem erfindungsgemäßen Gassack.

Die Erfindung stellt ferner ein Verfahren zur Herstellung eines Gassacks für ein Rückhaltesystem in Fahrzeugen bereit, welches die folgenden Schritte umfaßt: Bereitstellen eines oder mehrerer Gewebebahnen; Plasmabehandeln einer Oberfläche der Gewebebahnen in einem Mikrowellenreaktor oder einem Hochfrequenzreaktor zur Steigerung der Hitzebeständigkeit des Gewebes und Zuschneiden und Verbinden der Gewebebahnen in bekannter Weise unter Bildung des erfindungsgemäßen Gassacks.

Die Plasmabehandlung wird bevorzugt in einem Mikrowellenreaktor bei 2,4 bis 2,6 GHz durchgeführt. Des weiteren kann für die Plasmabehandlung ein Hochfrequenzreaktor verwendet werden, wobei die Behandlung unter Vakuum bei 13 bis 14 MHz durchgeführt wird. Besonders bevorzugt ist die Durchführung der Plasmabehandlung in dem grundsätzlich bekannten roll-to-roll Prozeß, der als kontinuierliches Verfahren eine besonders wirtschaftliche Herstellung ermöglicht.

Schließlich richtet sich die Erfindung auch auf die Verwendung eines Gewebes mit einer wenigstens teilweise in einem Plasma behandelten Oberfläche für den erfindungsgemäßen Gassack.

Die plasmabehandelten Gewebe zeigen gegenüber den herkömmlichen unbeschichteten Geweben eine zwischen zwei- und zehnfach erhöhte Hitzebeständigkeit gegen direkt auf die plasmabehandelte Fläche auftreffenden Heißgase. Aufgrund der äußerst niedrigen Schichtdicken der Beschichtung ist eine problemlose Faltung des Gassacks gewährleistet. Auch die Knickfestigkeit des gefalteten Luftsacks im Gassackmodul ist über einen der Fahrzeuglebensdauer entsprechenden Zeitraum ausreichend. Schließlich führt die Plasmabeschichtung auch nicht zu einer Veränderung der zuvor eingestellten Luftdurchlässigkeit des Gewebes.

Weitere Merkmale und Vorteile der Erfindung ergeben sich aus der folgenden Beschreibung einer Ausführungsform und aus der Zeichnung, auf die Bezug genommen wird. In der Zeichnung zeigt:

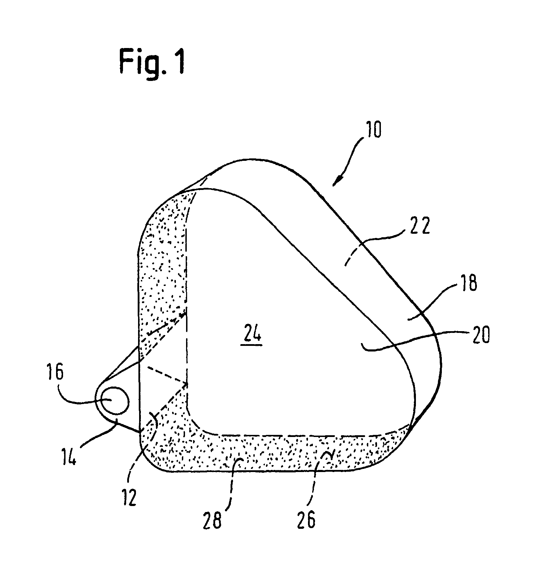

- Figur 1 eine schematische Perspektivansicht eines Gassacks in aufgeblasenem Zustand.

Der in Figur 1 im aufgeblasenen Zustand gezeigte Gassack 10 eines Rückhaltesystems für Fahrzeuge ist mit seiner Mundöffnung 12 an das Gehäuse 14 eines Gasgenerators 16 angeschlossen. Der hier gezeigte Gassack 10 besteht aus einem mittleren Gewebeteil 18 und zwei seitlichen Gewebeteilen 20, 22, die gemeinsam die Wandung 24 bilden. Es können jedoch auch andere Zuschnitte verwendet werden. Die dem aus dem Gasgenerator 16 in den Gassack einströmenden Gasvolumen zugewandte Oberfläche 26 des Gewebeteils 18 auf der Gassackinnenseite ist bei der hier gezeigten Ausführungsform zur Steigerung der Hitzebeständigkeit in einem Plasma behandelt. Des weiteren können auch die der Gassackinnenseite zugewandten Oberflächen der seitlichen Gewebeteile 20 und 22 plasmabehandelt sein. Es ist auch möglich, nur die Bereiche der Gewebeteile 18, 20 und 22 in dem Plasma zu behandeln, die den aus dem Gasgenerator 16 ausströmenden heißen Gasen besonders stark ausgesetzt sind. Im allgemeinen werden dies die der Mundöffnung 12 benachbarten Bereiche des Gassackgewebes sowie die der Mundöffnung 12 in Strömungsrichtung der heißen Gase gegenüberliegenden Gewebeteile sein.

In einer besonders bevorzugten Ausführungsform ist die Plasmabehandlung eine Metallisierung, so daß auf der Oberfläche 26 eine Metallschicht 28 gebildet ist, die eine Dicke von zwischen 40 nm und 10 µm aufweisen kann. In einer weiteren Ausführungsform der Erfindung ist die Oberfläche 26 fluoriert.

Zur Herstellung des erfindungsgemäßen Gassacks werden Gewebebahnen aus geeigneten Polyamid- oder Polyestergeweben mit vorbestimmter Luftdurchlässigkeit bereitgestellt. Diese Gewebebahnen werden zunächst in einem durch einen Mikrowellenreaktor oder einen Hochfrequenzreaktor erzeugten Plasma behandelt. Die Plasmabehandlung erfolgt vorzugsweise nach dem bereits bekannten roll-to-roll Prozeß, der als kontinuierliches Verfahren eine schnelle und wirtschaftliche Herstellung ermöglicht. Die Plasmaerzeugung im Mikrowellenreaktor erfolgt beispielsweise bei 2.4 bis 2,6 GHz unter gesteuerter Zuführung von bis zu drei Gasen zur Einstellung der Beschichtungsart und Beschichtungsstärke. Die Beschichtung im Hochfrequenzreaktor kann unter Erzeugung eines Niederdruckplasmas bei 13 bis 14 MHz unter Vakuum durch Magnetron-Sputtern oder Elektronenstrahl-Bedampfung erfolgen. Vorzugsweise wird über die Plasmabehandlung eine metallische Schutzschicht auf die Oberflächen der Gewebebahnen aufgebracht. Die Schichtstärke liegt vorzugsweise im Bereich von 40 nm bis 10 µm.

Die metallische Schutzschicht bietet einen wirkungsvollen Schutz gegen die Einwirkung heißer Gase. So konnte an einem Polyamidgewebe des Typs 470/F72dtex gezeigt werden, daß das durch Plasmabehandlung metallisierte Gewebe je nach Beschichtungsstärke eine zwei- bis zehnfach erhöhte Hitzebeständigkeit im Vergleich zu unbehandeltem Gewebe gleichen Typs aufwies. Für den Versuchsaufbau wurde eine definierte Oberfläche des jeweiligen Gewebes mit einer 33 g schweren und auf 850° C erhitzten Metallkugel mit einem Durchmesser von 20 mm beaufschlagt und die Zeit bis zum Durchschmelzen des Gewebes gemessen.

Ein weiterer Vorteil der durch die Plasmabehandlung erzeugten metallischen Schutzschicht auf dem Gassackgewebe liegt in der abschirmenden Wirkung gegen hochfrequente elektromagnetische Felder. Der über dem Gasgenerator gefaltete Luftsack kann so zusätzlich den empfindlichen Anzündmechanismus des Gasgenerators und die darunter angeordnete Fahrzeugelektronik abschirmen. So konnten beispielsweise Dämpfungen von ca. 70 dB zwischen 300 und 1000 MHz bei einer Beschichtungsstärke von ca. 400 nm erreicht werden.

Gassackgewebe, die ausschließlich eine verbesserte Hitzebeständigkeit aufweisen sollen, können außerdem mittels einer Plasmabehandlung fluoriert werden. In diesem Fall erfolgt eine kurze Behandlung in den oben beschriebenen Reaktoren unter Verwendung eines C₂F₆/Ar-Plasmas. Die für das Erreichen des gewünschten Fluorierungsgrades oder der gewünschten Beschichtungsstärke geeigneten Bedingungen der Plasmabehandlung, insbesondere Druck, Temperatur, Zeit und Zusammensetzung des Plasmas, können durch geeignete Vorversuche ermittelt werden.

Die mit dem oben beschriebenen Verfahren behandelten Gewebeteile werden danach in üblicher Weise zugeschnitten und unter Bildung des erfindungsgemäßen Gassacks miteinander verbunden.

Der so hergestellte Gassack weist eine verbesserte Beständigkeit gegenüber heißen Gasen auf. Die Massenzunahme des Gassackgewebes ist aufgrund der geringen Beschichtungsstärke jedoch nur unbedeutend. Somit bleiben die wesentlichen Vorteile unbeschichteter Gassäcke, insbesondere der geringere Platzbedarf im gefalteten Zustand, erhalten. Die Knickfestigkeit der aus den plasmabehandelten Gewebeteilen gebildeten Gassäcke ist über einen der Fahrzeuglebensdauer entsprechenden Zeitraum ausreichend. Da die Beschichtung der Gewebeteile in einem kontinuierlichen Prozeß erfolgen kann, ist auch eine kostengünstige Herstellung von besonders hitzebeständigen Gassäcken möglich.

## Patentansprüche

1. Gassack (10) für ein Rückhaltesystem in Fahrzeugen, mit einer Wandung (24) aus Gewebe (18, 20, 22) und einer Innenseite zur Aufnahme eines Gasvolumens, **dadurch gekennzeichnet, daß** eine Oberfläche (26) des Gewebes (18, 20, 22) zur Steigerung der Hitzebeständigkeit in einem Plasma behandelt ist, wobei die plasmabehandelte Oberfläche (26) im aufgeblasenen Zustand des Gassacks (10) dem Gasvolumen zugewandt ist.

2. Gassack nach Anspruch 1, **dadurch gekennzeichnet, daß** die Plasmabehandlung eine Metallisierung ist.

3. Gassack nach Anspruch 2, **dadurch gekennzeichnet, daß** die durch die Metallisierung gebildete Metallschicht (28) zwischen 40 nm und 10 µm dick ist.

4. Gassack nach Anspruch 1, **dadurch gekennzeichnet, daß** die Plasmabehandlung eine Fluorierung ist.

5. Gassack nach einem der Ansprüche 1 bis 4, **dadurch gekennzeichnet, daß** die Wandung (24) wenigstens teilweise aus dem Gewebe (18, 20, 22) mit der plasmabehandelten Oberfläche (26) besteht.

6. Gassack nach einem der Ansprüche 1 bis 4, **dadurch gekennzeichnet, daß** die Wandung (24) vollständig aus dem Gewebe (18, 20, 22) mit der plasmabehandelten Oberfläche (26) besteht.

7. Vorrichtung zum Schutz von Fahrzeuginsassen, mit einem Gassack (10) gemäß einem der Ansprüche 1 bis 6.

8. Verfahren zur Herstellung eines Gassacks (10) für ein Rückhaltesystem in Fahrzeugen gemäß einem der Ansprüche 1 bis 6, welches die folgenden Schritte umfaßt: Bereitstellen einer oder mehrerer Gewebebahnen; Plasmabehandeln einer Oberfläche der Gewebebahnen in einem Mikrowellenreaktor oder einem Hochfrequenzreaktor zur Steigerung der Hitzebeständigkeit des Gewebes und Zuschneiden und Verbinden der Gewebebahnen unter Bildung eines Gassacks.

9. Verfahren nach Anspruch 8 , **dadurch gekennzeichnet, daß** die Plasmabehandlung in dem Mikrowellenreaktor bei 2,4 bis 2,6 GHz durchgeführt wird.

10. Verfahren nach Anspruch 8, **dadurch gekennzeichnet, daß** die Plasmabehandlung in dem Hochfrequenzreaktor unter Vakuum bei 13 bis 14 MHz durchgeführt wird.

11. Verfahren nach einem der Ansprüche 8 bis 10, **dadurch gekennzeichnet, daß** die Plasmabehandlung in einem roll-to-roll Prozess durchgeführt wird.

12. Verwendung eines Gewebes mit einer wenigstens teilweise in einem Plasma behandelten Oberfläche in einem Gassack gemäß den Ansprüchen 1 bis 6.

## Claims

1. An airbag (10) for a restraint system in vehicles, comprising a wall (24) made of fabric (18, 20, 22) and an inside for receiving a gas volume, **characterized in that** one surface (26) of the fabric (18, 20, 22) is treated in a plasma in order to increase the heat resistance thereof, the plasma-treated surface (26) facing the gas volume in the inflated state of the airbag (10).

2. The airbag according to Claim 1, **characterized in that** the plasma treatment is a metallization.

3. The airbag according to Claim 2, **characterized in that** the metal layer (28) formed by the metallization is between 40 nm and 10 µm thick.

4. The airbag according to Claim 1, **characterized in that** the plasma treatment is a fluorination.

5. The airbag according to any of Claims 1 to 4, **characterized in that** the wall (24) consists at least partially of the fabric (18, 20, 22) with the plasma-treated surface (26).

6. The airbag according to any of Claims 1 to 4, **characterized in that** the wall (24) consists completely of the fabric (18, 20, 22) with the plasma-treated surface (26).

7. A device for the protection of vehicle occupants, comprising an airbag (10) according to any of Claims 1 to 6.

8. A method of producing an airbag (10) for a restraint system in vehicles according to any of Claims 1 to 6, which comprises the following steps: preparing one or more lengths of fabric; plasma treatment of a surface of the fabric lengths in a microwave reactor or a high-frequency reactor in order to increase the heat resistance of the fabric, and cutting and joining the fabric lengths to form an airbag.

9. The method according to Claim 8, **characterized in that** the plasma treatment is carried out in the microwave reactor at 2.4 to 2.6 GHz.

10. The method according to Claim 8, **characterized in that** the plasma treatment is carried out in the high-frequency reactor under a vacuum at 13 to 14 MHz.

11. The method according to any of Claims 8 to 10, **characterized in that** the plasma treatment is carried out in a roll-to-roll process.

12. Use of a fabric having a surface that has been at least partially treated in a plasma, in an airbag according to Claims 1 to 6.

## Revendications

1. Coussin à gaz (10) pour un système de retenue dans des véhicules, comportant une paroi (24) en tissu (18, 20, 22) et une surface intérieure pour recevoir un volume de gaz, **caractérisé en ce qu'**une surface (26) du tissu (18, 20, 22) est traitée dans un plasma pour augmenter la résistance à la chaleur, la surface (26) traitée au plasma étant tournée vers le volume de gaz à l'état gonflé du coussin à gaz (10).

2. Coussin à gaz selon la revendication 1, **caractérisé en ce que** le traitement au plasma est une métallisation.

3. Coussin à gaz selon la revendication 2, **caractérisé en ce que** la couche métallique (28) formée par la métallisation a une épaisseur entre 40 nm et 10µm.

4. Coussin à gaz selon la revendication 1, **caractérisé en ce que** le traitement au plasma est une fluorisation.

5. Coussin à gaz selon l'une des revendications 1 à 4, **caractérisé en ce que** la paroi (24) est constituée au moins partiellement par le tissu (18, 20, 22) avec la surface (26) traitée au plasma.

6. Coussin à gaz selon l'une des revendications 1 à 4, **caractérisé en ce que** la paroi (24) est constituée entièrement par le tissu (18, 20, 22) avec la surface (26) traitée au plasma.

7. Dispositif de protection d'occupants d'un véhicule, comportant un coussin à gaz (10) selon l'une des revendications 1 à 6.

8. Procédé de fabrication d'un coussin à gaz (10) pour un système de retenue dans des véhicules selon l'une des revendications 1 à 6, qui comprend les étapes suivantes : Fourniture d'une ou de plusieurs bandes de tissu ; traitement au plasma d'une surface des bandes de tissu dans un réacteur à micro-ondes ou dans un réacteur à haute fréquence pour augmenter la résistance à la chaleur du tissu ; et découpe et assemblage des bandes de tissu pour former un coussin à gaz.

9. Procédé selon la revendication 8, **caractérisé en ce que** le traitement au plasma dans le réacteur à micro-ondes est effectué entre 2,4 et 2,6 GHz.

10. Procédé selon la revendication 8, **caractérisé en ce que** le traitement au plasma dans le réacteur à haute fréquence est effectué sous vide entre 13 et 14 MHz.

11. Procédé selon l'une des revendications 8 à 10, **caractérisé en ce que** le traitement au plasma est effectué dans un processus roll to roll.

12. Utilisation d'un tissu avec une surface traitée au moins partiellement dans un plasma, dans un coussin à gaz selon les revendications 1 à 6.
